# EUROPÄISCHE PATENTSCHRIFT

(11) **EP 1 300 338 B1**
(45) Veröffentlichungstag und Bekanntmachung des Hinweises auf die Patenterteilung: **26.10.2005**
(21) Anmeldenummer: 02018043.6
(22) Anmeldetag: 13.08.2002
(51) Int. Cl.: B65B 9/20

(54) **Vertikale Schlauchbeutelmaschine zum Herstellen kantenverschweisster Schlauchbeutel**
Vertical form fill seal machine for making edge sealed tubular bags
Machine verticale de formage, remplissage et scellage de sacs pour la fabrication de sacs tubulaires avec des arêtes scellés

(30) Priorität: 08.10.2001 DE 10149476
(43) Veröffentlichungstag der Anmeldung: 09.04.2003
(73) Patentinhaber: ROVEMA VERPACKUNGSMASCHINEN GMBH, 35463 Fernwald (DE)
(72) Erfinder: Kuss, Gerhard, 35584 Wetzlar (DE); Ohrisch, René, 35415 Pohlheim (DE); Kandl, Franz, 35428 Langgöns (DE); Baur, Walter, Dr., 63584 Gründau (DE)

(56) Entgegenhaltungen:
- EP-A- 1 106 515
- WO-A-82/01359
- PATENT ABSTRACTS OF JAPAN vol. 2000, no. 24, 11. Mai 2001 (2001-05-11) -& JP 2001 206307 A (KAWASHIMA PACKAGING MACH LTD), 31. Juli 2001 (2001-07-31)
- PATENT ABSTRACTS OF JAPAN vol. 1999, no. 02, 26. Februar 1999 (1999-02-26) -& JP 10 305806 A (KAWASHIMA PACKAGING MACH LTD), 17. November 1998 (1998-11-17)

## Beschreibung

Die Erfindung betrifft eine vertikale Schlauchbeutelmaschine mit einer Formschulter zum Umformen einer Folienbahn zu einem Folienschlauch, einer Längsschweißeinrichtung zum Verschweißen des Folienschlauches parallel zu seiner Transportrichtung unter Erzeugung einer Längsnaht, einer Querschweißeinrichtung zum Verschweißen des Folienschlauches quer zur Transportrichtung mittels Quemähten einer Trenneinrichtung zum Abtrennen von Schlauchbeuteln vom Folienschlauch, einem Füllrohr zum wahlweisen Befüllen der Schlauchbeutel, einem aus zwei am Füllrohr gegenüberliegenden, das Füllrohr begrenzenden, gegenläufig umlaufenden Folienabzügen zum Abziehen der Folienbahn von einer Vorratsrolle und zum Weitertransportieren des Folienschlauches, wobei die Folienabzüge entlang einer Wirklinie gegen das Füllrohr wirken, um den Folienschlauch zwischen dem vertikalen Füllrohr und den Folienabzügen mit Reibschluss zu ergreifen und nach unten zu bewegen. Am Füllrohr sind abstehende Formelemente zur Ausbildung von ausgelenkten Kanten am Folienschlauch vorgesehen. Jeweils ein Siegelelement ist einem Formelement in Transportrichtung nachgeordnet, um die Kanten zu verschweißen. Die verschweißten Kanten führen zu Schlauchbeuteln mit erhöhter Stabilität.

Eine derartige Schlauchbeutelmaschine ist aus JP-A-2001-206307 bekannt.

Bei einer weiteren bekannten Schlauchbeutelmaschine dieser Art sind die Formelementen spiegelsymmetrisch zur Wirklinie angeordnet. Dadurch ist gewährleistet, dass die Folienbahn störungsfrei über die Formelemente läuft. Ein Formelement erzeugt lokal einen relativ hohen Widerstand für den weiterbewegten Folienschlauch. Sind zwei oder vier derartige Widerstände vorgesehen, um Schlauchbeutel mit zwei oder vier verschweißten Kanten herzustellen, so ist der Folienlauf nicht gestört, sofem diese Widerstände gleichmäßig über die Folienbahn verteilt sind. Dies ist beim bekannten Stand der Technik der Fall.

Bei der bekannten Schlauchbeutelmaschine käme es zu einem sogenannten Verlaufen der Folienbahn, also einem unkorrekten Folienlauf, der mittels eines Regelmechanismus korrigiert werden müsste, wenn die Formelemente nicht spiegelsymmetrisch zur Wirklinie angeordnet wären. Für eine größere Beutelvielfalt wäre es aber wünschenswert, die Formelemente frei wählbar am Füllrohr anzuordnen, um eine unterschiedliche Anzahl von Formelementen auf den beiden Seiten, die durch die Wirklinie voneinander getrennt werden, realisieren zu können, ohne diesen Regelmechanismus zu benötigen. Ebendiese Aufgabe liegt der Erfindung zu Grunde.

Gelöst ist die Aufgabe durch eine Schlauchbentelmaschine mit den Merkmalen des Anspruchs 1.

Die erfindungsgemäße Schlauchbeutelmaschine hat den Vorteil, dass die Formelemente frei wählbar in unterschiedlicher Anzahl auf den beiden durch die Wirklinie voneinander getrennten Seiten eingesetzt werden können, ohne dass der Folienlauf nachteilig beeinträchtigt wird. Dadurch, dass die beiden Strecken zumindest annähernd gleich lang sind, wird der über die Kanten verlaufende Umfang des Folienschlauches an der Wirklinie mittig von den Folienabzügen ergriffen und störungsfrei weiterbewegt. Unter annähernd gleich ist zu verstehen, dass der Unterschied der Streckenlängen weniger als die Strecke beträgt, welche über ein Formelement führt, vorzugsweise das 1,5-fache einer Erhebungshöhe eines Formelementes. Durch die Gleichheit der Strecken ist die Kontaktlänge der Innenfläche des Folienschlauches mit der äußeren Oberfläche des Füllrohres und der Formelemente ebenfalls gleich, wodurch die Reibungskräfte entlang der Strecken einander angeglichen sind.

Da eine Parallele in einem Abstand zur Wirkgeraden vorgesehen ist, die ebenfalls wie die Wirkgerade in der Querschnittsebene liegt, setzt der Krümmungsradius der inneren Oberfläche eines Bereichs des Füllrohres am Kreuzungspunkt der Wirkgeraden mit einer senkrecht dazu verlaufenden, die Querschnittsebene durchsetzenden Mittellinie an, und das der Krümmungsradius der äußeren Oberfläche dieses Bereichs am Schnittpunkt der Parallelen mit der Mittellinie ausetzt kann derart in technisch zuverlässiger Weise ein Füllrohr mit den gewünschten, gleichen Strecken hergestellt werden. Die Krümmungsradien, deren Ansetzpunkte und der Abstand können in einfacher Weise berechnet und für die Füllrohrfertigung vorgegeben werden.

Dadurch, daß der Krümmungsradius der inneren Oberfläche des Bereichs kleiner ist als der Krümmungsradius der äußeren Oberfläche dieses Bereichs sind der Fertigungsaufwand und die einzusetzenden Materialien minimiert.

Weitere, vorteithafte Ausgestaltungen der Erfindung sind in den Ansprüchen bis 7 beschrieben.

Liegt entlang der ersten Strecke kein Formelement vor und sind entlang der zweiten Strecke zwei Formelemente vorgesehen (Anspruch 2), so können derart Schlauchbeutel mit lediglich zwei verschweißten Bodenkanten hergestellt werden. Gerade dieser Beuteltyp führte auf Grund des bei herkömmlichen Schlauchbeutelmaschinen vorkommenden großen Streckenunterschiedes zu relativ großen Problemen hinsichtlich des Folienlaufs.

Die Fertigung ist relativ einfach, wenn lediglich zwei Formelemente auf der zweiten Strecke vorkommen und gemäß Anspruch 3 der Bereich entlang der ersten Strecke oder gemäß Anspruch 4 entlang beider Strecken vorgesehen ist.

Ist ein über die Formelemente greifendes Führungselement vorgesehen, wobei die Kanten zwischen den Formelementen und dem Führungselement verlaufen (Anspruch 5), so ist der Kantenverlauf genauer. Hierdurch werden in Abhängigkeit von der Folienbedruckung die verschweißten Kanten ortsgenau erzeugt.

Der Folienlauf ist weiter verbessert, wenn analog Anspruch 6 ein in einem Füllrohrstück der Formschulter verlaufendes Teilstück des Füllrohres eine zur äußeren Oberfläche konzentrische innere Oberfläche aufweist. Dieses Teilstück ist analog einem herkömmlichen Füllrohr ausgebildet.

Sind am Füllrohr Abflachungen zum Ansetzen der Folienabzüge vorgesehen (Anspruch 7), so erfolgt ein besserer Reibschluss zwischen dem Folienschlauch und den Folienabzügen, und der Folientransport ist genauer.

Im folgenden wird die Erfindung an Hand von Ausführungsbeispiele darstellenden Figuren näher beschreiben. Es zeigt:
- Figur 1: in einer Seitenansicht eine vertikale Schlauchbeutelmaschine zum Erzeugen von Schlauchbeuteln mit zwei verschweißten Bodenkanten;
- Figur 2: in einer Seitenansicht den um 90 Grad um seine Mittelachse gedrehten Gegenstand der Figur 1;
- Figur 3: in einem Schnitt entlang A-A der Figur 1 den Gegenstand der Figur 1, wobei sich ein Folienschlauch zwischen einem äußeren Füllrohrstück einer Formschulter und einem inneren Teilstück des Füllrohres verläuft;
- Figur 4: in einem Schnitt entlang B-B der Figur 1 den Gegenstand der Figur 1, wobei das Füllrohr zwei unterschiedliche Radien R1 und R2 aufweist, zwei Formelemente Kanten im Folienschlauch ausbilden, und eine Längsschweiß- einrichtung eine Längsnaht verschweißt;

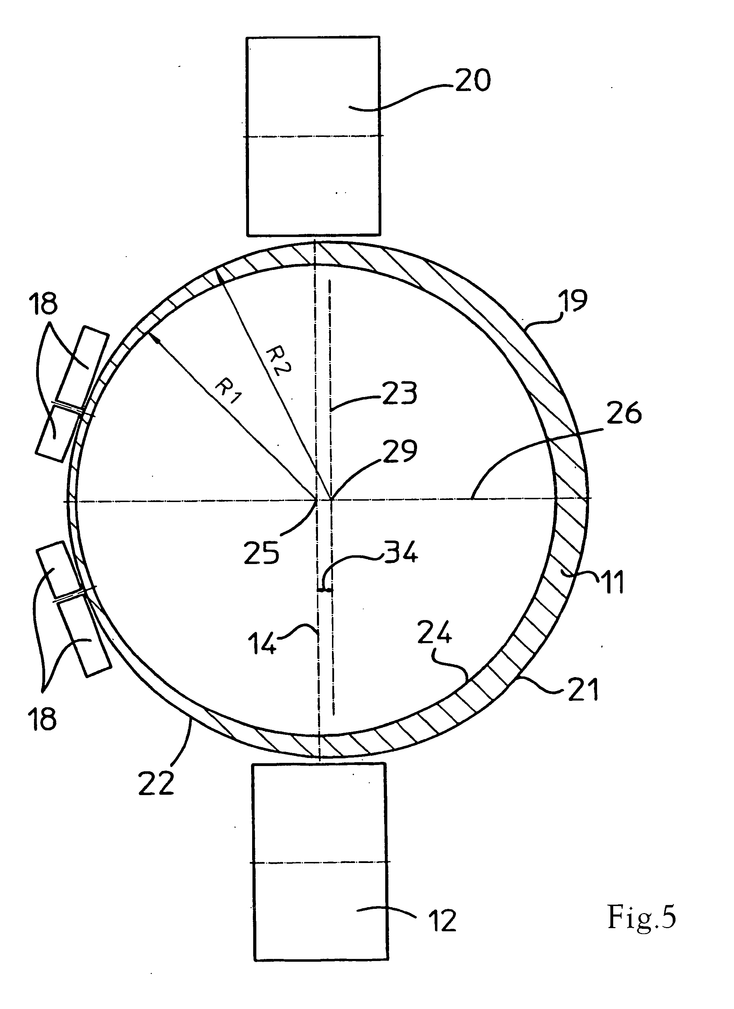

- Figur 5: in einem Schnitt entlang C-C der Figur 2 zwei gegenüberliegende Folienabzüge, die an einer Wirklinie der Folienabzüge am Füllrohr ansetzen;
- Figur 6: in einer perspektivischen Darstellung einen mittels einer Schlauchbeutelmaschine gemäß Figur 1 hergestellten Schlauchbeutel, welcher bodenseitig zwei verschweißte Kanten aufweist;
- Figur 7: in einem Vertikalschnitt den Gegenstand der Figur 6;
- Figur 8: in einem Horizontalschnitt ein vertikales Füllrohr analog Figur 5, jedoch mit anders angesetzten Radien R1 und R2, sowie
- Figur 9: den um 90 Grad um seine vertikale Mittelachse gedrehten Gegenstand der Figur 8, wobei am Füllrohr Abflachungen zum besseren Angreifen der Folienabzüge vorgesehen sind.

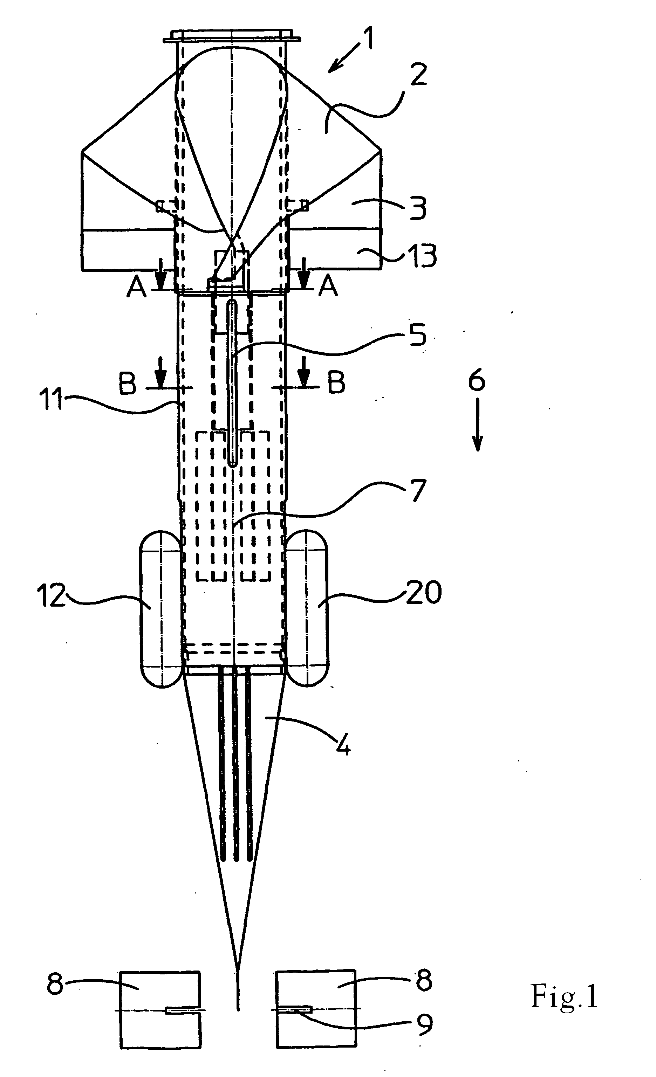

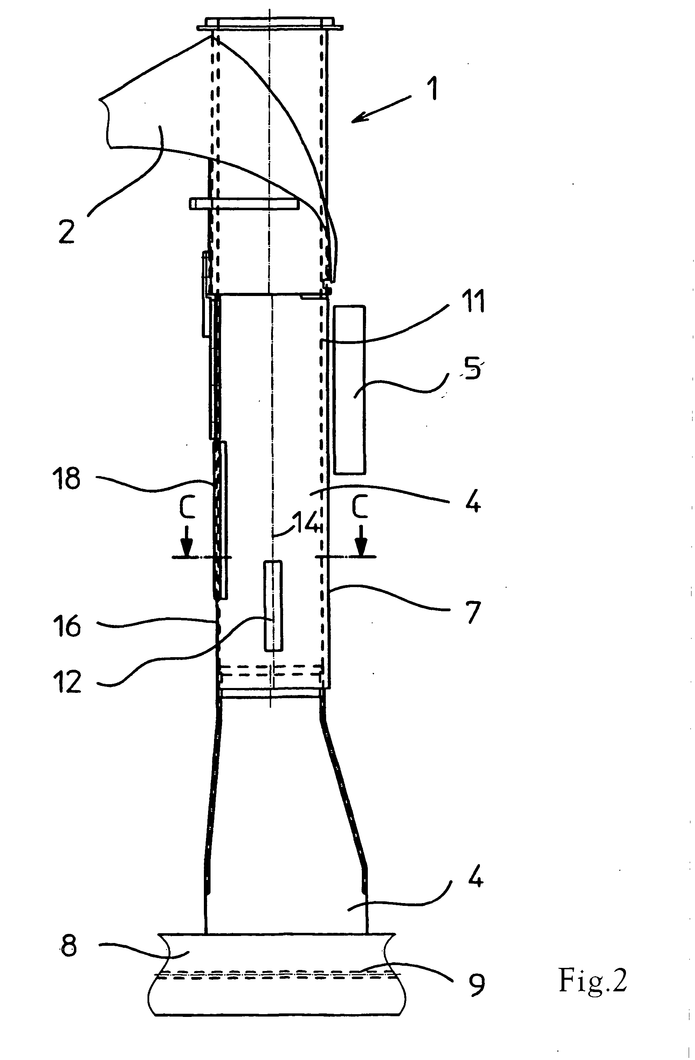

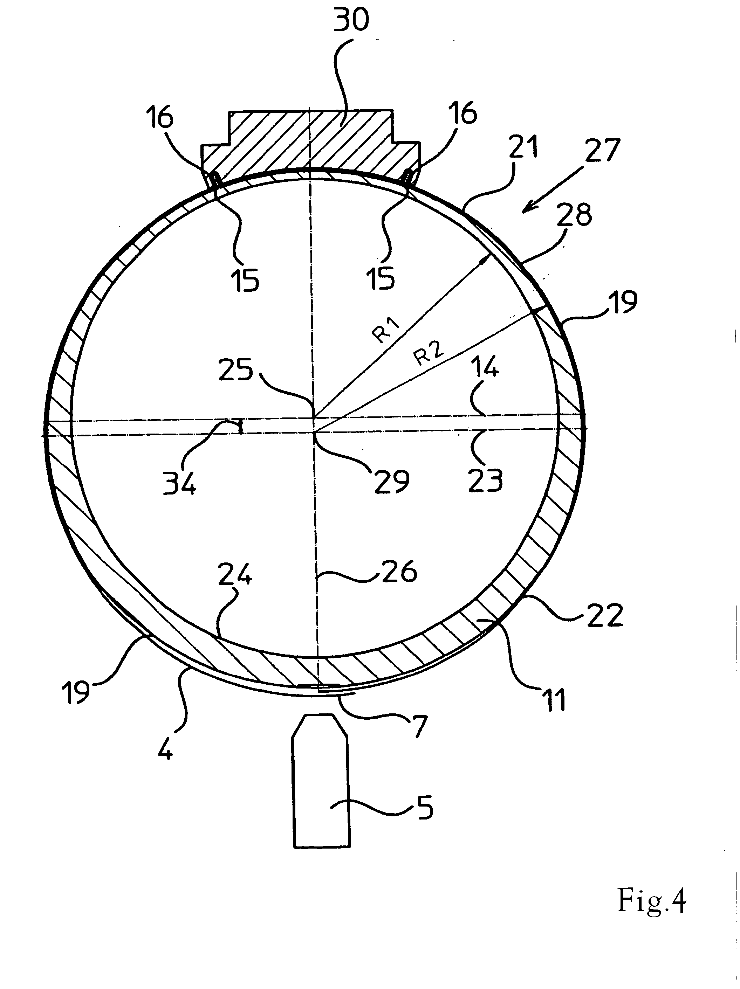

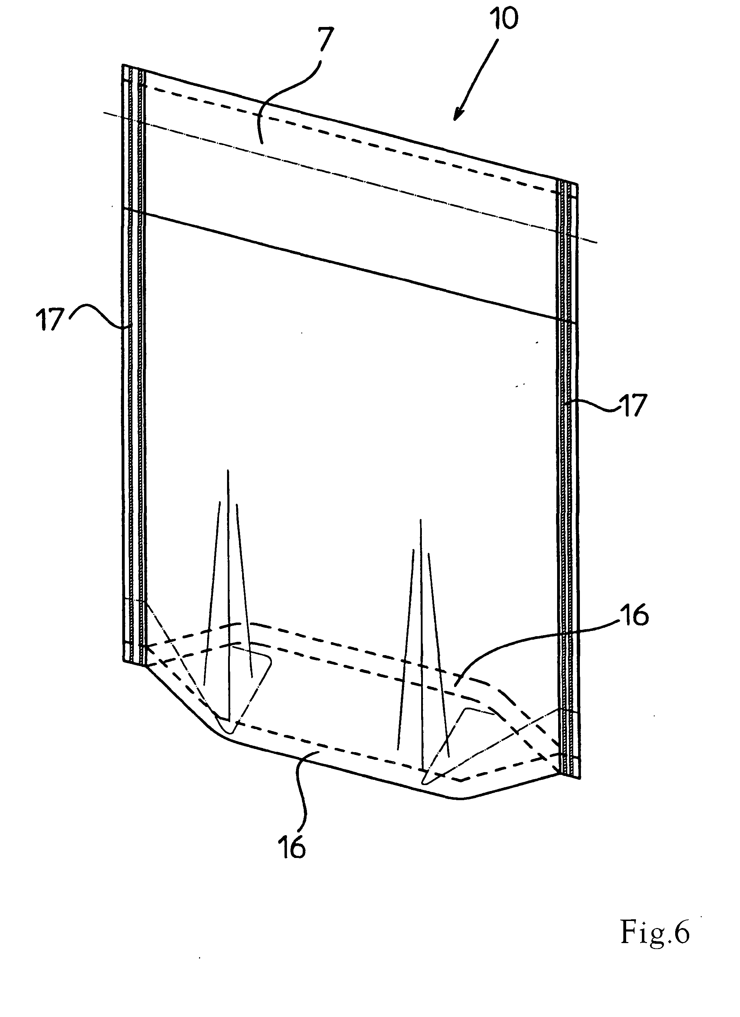

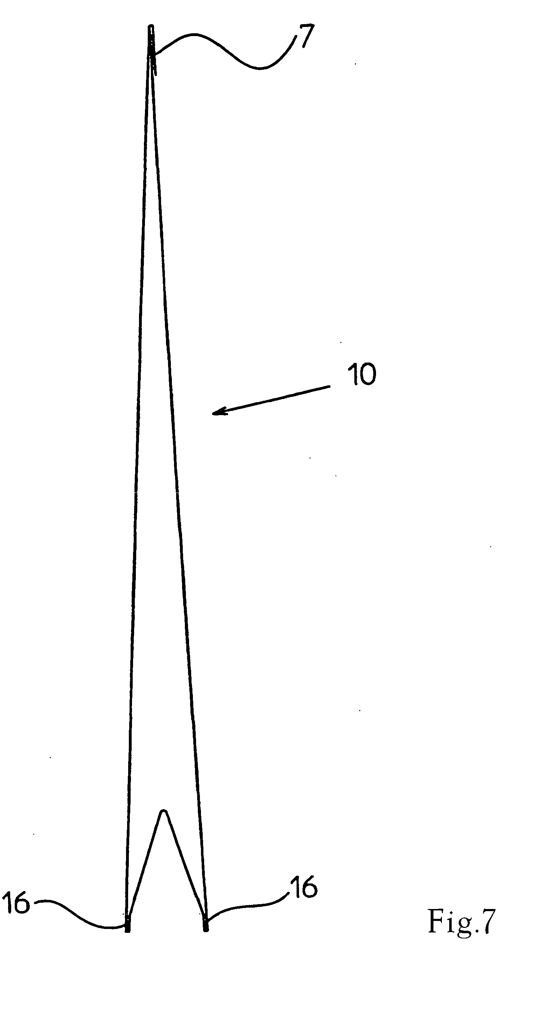

Bei einer vertikalen Schlauchbeutelmaschine 1 dient eine Formschulter 2 einem Umformen einer Folienbahn 3 zu einem Folienschlauch 4 (Figur 1, Figur 2). Eine Längsschweißeinrichtung 5 ist zum Verschweißen des Folienschlauches 4 parallel zu seiner Transportrichtung 6 unter Erzeugung einer Längsnaht 7 vorgesehen. Eine Querschweißeinrichtung 8 dient zum Verschweißen des Folienschlauches 4 quer zur Transportrichtung 6 mittels Quernähten 17. Eine Trenneinrichtung 9 ist zum Abtrennen von Schlauchbeuteln 10 vom Folienschlauch 4 vorgesehen, ein Füllrohr 11 zum wahlweise Befüllen der Schlauchbeutel 10 (Figur 6, Figur 7). Zwei am Füllrohr 11 gegenüberliegende, das Füllrohr 11 begrenzende, gegenläufig umlaufende Folienabzüge 12, 20 dienen zum Abziehen der Folienbahn 3 von einer Vorratsrolle 13 und zum Weitertransportieren des Folienschlauches 4, wobei die Folienabzüge 12, 20 entlang einer Wirklinie 14 gegen das Füllrohr 11 wirken, um den Folienschlauch 4 zwischen dem vertikalen Füllrohr 11 und den Folienabzügen 12, 20 mit Reibschluss zu ergreifen und nach unten zu bewegen. Vom Füllrohr 11 stehen Formelemente 15 zur Ausbildung von ausgelenkten Kanten 16 des Folienschlauches 11 ab (Figur 4). Jeweils in Transportrichtung 6 den Formelementen 15 nachgeordnet ist ein Siegelelement 18 vorgesehen, um die Kanten 16 zu verschweißen. Am horizontalen Querschnitt des Füllrohres 11 erstreckt sich eine erste Strecke 21 von der Wirklinie 14 am ersten Folienabzug 12 aus über die äußere Oberfläche 19 des Füllrohres 11 bis hin zur Wirklinie 14 am zweiten Folienabzug 20 (Figur 4). Diese erste Strecke 21 ist vom Betrag her gleich einer zweiten Strecke 22 welche von der Wirklinie 14 des ersten Folienabzugs 12 ausgeht und über die äußere Oberfläche 19 und über die Formelemente 15 hin zur Wirklinie 14 am zweiten Folienabzug 20 reicht. Die Formelemente 15 sind lediglich an der ersten Strecke 21 vorgesehen.

Es ist eine Parallele 23 in einem Abstand 34 zur Wirkgeraden 14 vorgesehen, welche ebenfalls wie die Wirkgerade 14 in der Querschnittsebene liegt. Der Krümmungsradius R1 der inneren Oberfläche 24 eines Bereichs 27 des Füllrohres 11 setzt am Kreuzungspunkt 25 der Wirkgeraden 14 mit einer senkrecht dazu verlaufenden, die Querschnittsebene durchsetzenden Mittellinie 26 an. Der Krümmungsradius R2 der äußeren Oberfläche 28 dieses Bereichs 27 setzt dagegen am Schnittpunkt 29 der Parallelen 23 mit der Mittellinie 26 an.

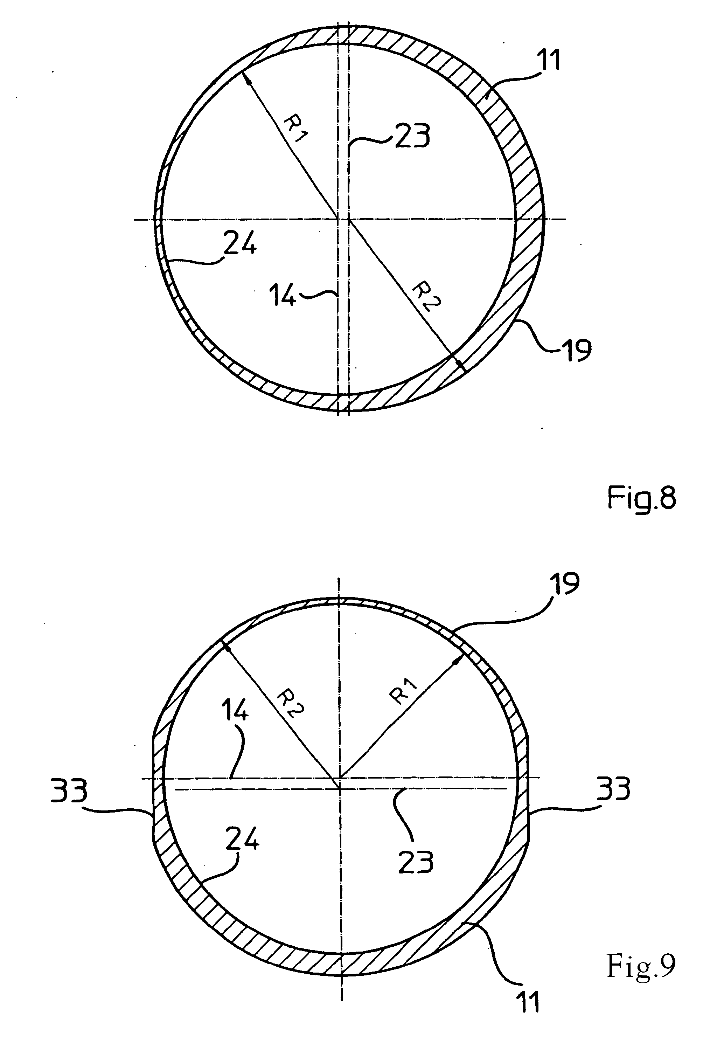

Der Bereich 27 ist entlang der ersten Strecke 21 vorgesehen. Beim Ausführungsbeispiel der Figur 8 ist dagegen der Bereich 27 entlang der ersten Strecke 21 und der zweiten Strecke 22 vorgesehen.

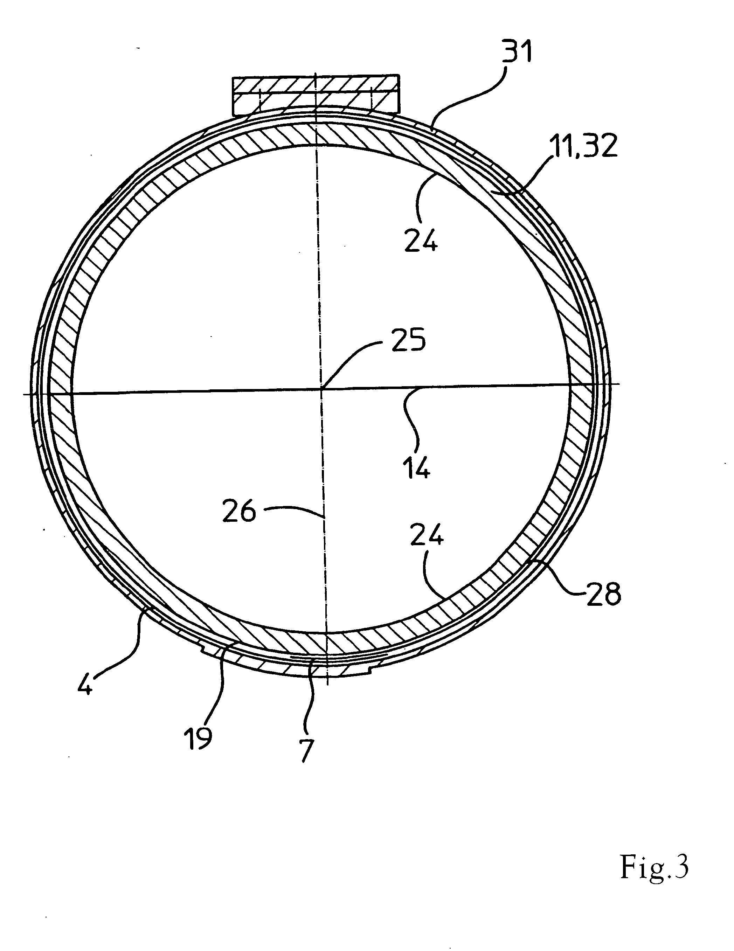

Ein über die Formelemente 15 greifendes Führungselement 30 ist am Folienschlauch 4 vorgesehen, wobei die Kanten 16 zwischen den Formelementen 15 und dem Führungselement 30 verlaufen (Figur 4). Der Krümmungsradius R1 der inneren Oberfläche 24 des Bereichs 27 ist kleiner als der Krümmungsradius R2 der äußeren Oberfläche 28 dieses Bereichs 27. Ein in einem Füllrohrstück 31 der Formschulter 2 verlaufendes Teilstück 32 des Füllrohres 11 weist eine zur äußeren Oberfläche 28 konzentrische innere Oberfläche 24 auf (Figur 3). In einem weiteren Ausführungsbeispiel (Figur 9) sind am Füllrohr 11 Abflachungen 33 zum besseren Ansetzen der Folienabzüge 12, 20 vorgesehen.

In Folge der gleichen Längen der Strecken 21, 22 ist der Folienlauf optimiert.
- 1: Schlauchbeutelmaschine
- 2: Formschulter
- 3: Folienbahn
- 4: Folienschlauch
- 5: Längsschweißeinrichtung
- 6: Transportrichtung
- 7: Längsnaht
- 8: Querschweißeinrichtung
- 9: Trenneinrichtung
- 10: Schlauchbeutel
- 11: Füllrohr
- 12: Folienabzug
- 13: Vorratsrolle
- 14: Wirklinie
- 15: Formelement
- 16: Kante
- 17: Quemaht
- 18: Siegelelement
- 19: äußere Oberfläche
- 20: Folienabzug
- 21: erste Strecke
- 22: zweite Strecke
- 23: Parallele zu 14
- 24: innere Oberfläche
- 25: Kreuzungspunkt
- 26: Mittellinie
- 27: Bereich
- 28: äußere Oberfläche
- 29: Schnittpunkt (23 mit 26)
- 30: Führungselement
- 31: Füllrohrstück
- 32: Teilstück
- 33: Abflachung
- 34: Abstand

## Patentansprüche

1. Vertikale Schlauchbeutelmaschine (1) mit einer Formschulter (2) zum Umformen einer Folienbahn (3) zu einem Folienschlauch (4), einer Längsschweißeinrichtung (5) zum Verschweißen des Folienschlauches (4) parallel zu seiner Transportrichtung (6) unter Erzeugung einer Längsnaht (7), einer Querschweißeinrichtung (8) zum Verschweißen des Folienschlauches (4) quer zur Transportrichtung (6) mittels Quemähten (17) einer Trenneinrichtung (9) zum Abtrennen von Schlauchbeuteln (10) vom Folienschlauch (4), einem Füllrohr (11) zum wahlweisen Befüllen der Schlauchbeutel (10), einem aus zwei am Füllrohr (11) gegenüberliegenden, das Füllrohr (11) begrenzenden, gegenläufig umlaufenden Folienabzügen (12, 20) zum Abziehen der Folienbahn (3) von einer Vorratsrolle (13) und zum Weitertransportieren des Folienschlauches (4), wobei die Folienabzüge (12, 20) entlang einer Wirklinie (14) gegen das Füllrohr (11) wirken, um den Folienschlauch (4) zwischen dem vertikalen Füllrohr (11) und den Folienabzügen (12, 20) mit Reibschluss zu ergreifen und nach unten zu bewegen, mit vom Füllrohr (11) abstehenden Formelementen (15) zur Ausbildung von ausgelenkten Kanten (16) am Folienschlauch (11), sowie mit jeweils einem Siegelelement (18) pro Formelement (15), die in Transportrichtung (6) den Formelementen (15) nachgeordnet sind, um die Kanten (16) zu verschweißen, wobei am horizontalen Querschnitt des Füllrohres (11) eine erste Strecke (21) von der Wirklinie (14) am ersten Folienabzug (12) aus über die äußere Oberfläche (19) des Füllrohres (11) bis hin zur Wirklinie (14) am zweiten Folienabzug (20), wobei ein Formelement (15) umlaufen wird, sofem es auf dieser Strecke (21) vorliegt gleich oder annähernd gleich ist wie eine zweite Strecke (22), welche von der Wirklinie (14) des ersten Folienabzugs (12) ausgeht und über die äußere Oberfläche (19) und über mindestens ein Formelement (15) hin zur Wirklinie (14) am zweiten Folienabzug (20) reicht, und die Anzahl der Formelemente (15) der beiden Strecken (21, 22) ungleich ist, **dadurch gekennzeichnet, dass** eine Parallele (23) in einem Abstand (34) zur Wirklinie (14) vorgesehen ist, welche ebenfalls wie die Wirklinie (14) in der Querschnittsebene liegt, dass ein Krümmungsradius (R1) der inneren Oberfläche (24) eines Bereichs (27) des Füllrohres (11) am Kreuzungspunkt (25) der Wirklinie (14) mit einer senkrecht dazu verlaufenden, die Querschnittsebene durchsetzenden Mittellinie (26) ansetzt, dass ein Krümmungsradius (R2) der äußeren Oberfläche (28) dieses Bereichs (27) am Schnittpunkt (29) der Parallelen (23) mit der Mittellinie (26) ansetzt, dass der Krümmungsradius (R1) der inneren Oberfläche (24) des Bereichs (27) kleiner als der Krümmungsradius (R2) der äußeren Oberfläche (28) dieses Bereichs (27) ist.

2. Schlauchbeutelmaschine nach Anspruch 1, **dadurch gekennzeichnet, dass** entlang der ersten Strecke (21) kein Formelement vorliegt und entlang der zweiten Strecke (22) zwei Formelemente (15) vorgesehen sind.

3. Schlauchbeutelmaschine nach Anspruch 1, **dadurch gekennzeichnet, dass** der Bereich (27) entlang der ersten Strecke (21) vorgesehen ist.

4. Schlauchbeutelmaschine nach Anspruch 3, **dadurch gekennzeichnet, dass** der Bereich (27) entlang der ersten Strecke (21) und der zweiten Strecke (22) vorgesehen ist.

5. Schlauchbeutelmaschine nach einem der Ansprüche 1 bis 4, **dadurch gekennzeichnet, dass** ein über die Formelemente (15) greifendes Führungselement (30) vorgesehen ist, wobei die Kanten (16) zwischen den Formelementen (15) und dem Führungselement (30) verlaufen.

6. Schlauchbeutelmaschine nach Anspruch 1, **dadurch gekennzeichnet, dass** ein in einem Füllrohrstück (31) der Formschulter (2) verlaufendes Teilstück (32) des Füllrohres (11) eine zur äußeren Oberfläche (28) konzentrische innere Oberfläche (24) aufweist.

7. Schlauchbeutelmaschine nach mindestens einem der Ansprüche 1 bis 6, **dadurch gekennzeichnet, dass** am Füllrohr (11) Abflachungen (33) zum Ansetzen der Folienabzüge (12, 20) vorgesehen sind.

## Claims

1. A vertical bag-forming, -filling and sealing machine (1) with a shaping shoulder (2) for shaping a sheet of film (3) to form a film tube (4), a longitudinal welding device (5) for welding the film tube (4) parallel to its conveying direction (6) while producing a longitudinal seam (7), a transverse welding device (8) for welding the film tube (4) transversely to the conveying direction (6) by means of transverse seams (17), a separating device (9) for separating tube bags (10) from the film tube (4), a filling tube (11) for optionally filling the tube bags (10), two film-draw-off means (12, 20) which are opposite each other on the filling tube (11) and bound the filling tube (11) and which rotate in opposite directions for drawing off the sheet of film (3) from a supply roll (13) and for further conveying the film tube (4), the film-draw-off means (12, 20) acting along an effective line (14) against the filling tube (11) in order to grip the film tube (4) between the vertical filling tube (11) and the film-draw-off means (12, 20) with friction locking and to move it downwards, with shaping elements (15) projecting from the filling tube (11) in order to form deflected edges (16) on the filling tube (11), and with one respective sealing element (18) *per* shaping element (15) in each case, which sealing elements (18) are arranged downstream of the shaping elements (15) in the conveying direction (6) in order to weld the edges (16), in which case, on the horizontal cross-section of the filling tube (11), a first length (21) from the effective line (14) on the first film-draw-off means (12) over the external surface (19) of the filling tube (11) as far as the effective line (14) on the second film-draw-off means (20) - circulation taking place about a shaping element (15) if it is present on this length (21) - is equal or approximately equal to a second length (22) which starts from the effective line (14) of the first film-draw-off means (12) and extends beyond the external surface (19) and beyond at least one shaping element (15) to the effective line (14) on the second film-draw-off means (20), and the number of the shaping elements (15) of the two lengths (21, 22) is unequal, **characterized in that** a parallel line (23) is provided at a distance (34) from the effective line (14), which is situated in the cross-sectional plane in the same way as the effective line (14), a radius of curvature **(R1)** of the internal surface (24) of a region (27) of the filling tube (11) adjoins the point of intersection (25) of the effective line (14) with a centre line (26) extending at a right angle to it and passing through the cross-sectional plane, a radius of curvature **(R2)** of the external surface (28) of the said region (27) adjoins the point of intersection (29) of the parallel line (23) with the centre line (26), and the radius of curvature **(R1)** of the internal surface (24) of the region (27) is smaller than the radius of curvature (R2) of the external surface (28) of the said region (27).

2. A bag-forming, -filling and sealing machine according to Claim 1, **characterized in that** no shaping element is present along the first length (21) and two shaping elements (15) are provided along the second length (22).

3. A bag-forming, -filling and sealing machine according to Claim 1, **characterized in that** the region (27) is provided along the first length (21).

4. A bag-forming, -filling and sealing machine according to Claim 3, **characterized in that** the region (27) is provided along the first length (21) and the second length (22).

5. A bag-forming, -filling and sealing machine according to one of Claims 1 to 4, **characterized in that** a guide element (30) engaging over the shaping elements (15) is provided, the edges (16) extending between the shaping elements (15) and the guide element (30).

6. A bag-forming, -filling and sealing machine according to Claim 1, **characterized in that** a portion (32) of the filling tube (11) extending in a filling-tube portion (31) of the shaping shoulder (2) has an internal surface (24) which is concentric with the external surface (28).

7. A bag-forming, -filling and sealing machine according to at least one of Claims 1 to 6, **characterized in that** flattened portions (33) for the attachment of the film-draw-off means (12, 20) are provided on the filling tube (11).

## Revendications

1. Machine verticale de formage de sacs (1) ayant un épaulement de forme (2) pour transformer un ruban de film (3) en un tube de film (4), un dispositif de soudage longitudinal (5) pour souder le tube de film (4) parallèlement à sa direction de transport (6) en produisant une soudure longitudinale (7), un dispositif de soudage transversal (8) pour souder le tube de film (4) transversalement à la direction de transport (6) au moyen de soudures transversales (17), un dispositif de séparation (9) pour séparer des sacs tubulaires (10) du tube de film (4), une conduite de remplissage (11) pour remplir sélectivement les sacs tubulaires (10), deux organes de tirage de film (12, 20) en opposition vis-à-vis de la conduite de remplissage (11), adjacents à la conduite de remplissage (11) et l'entourant en sens contraire pour tirer le ruban de film (3) à partir d'un rouleau de réserve (13) et pour transporter plus avant le tube de film (4), où les organes de tirage de film (12, 20) agissent le long d'une ligne d'action (14) contre la conduite de remplissage (11) afin de saisir le tube de film (4) entre la conduite de remplissage (11) verticale et les organes de tirage de film (12, 20) par friction et de le déplacer vers le bas, ayant des éléments de formage (15) écartés de la conduite de remplissage (11) pour réaliser des arêtes (16) déviées sur le tube de film (4), et ayant respectivement un élément de scellage (18) par élément de formage (15), qui sont agencés en aval des éléments de formage (15) dans la direction de transport (6), afin de souder les arêtes (16), où sur la section horizontale de la conduite de remplissage (11), un premier tronçon (21) qui s'étend à partir de la ligne d'action (14) sur le premier organe de tirage de film (12), en passant par la surface extérieure (19) de la conduite de remplissage (11), jusqu'à la ligne d'action (14) sur le deuxième organe de tirage de feuille (20), où un élément de formage (15) est entouré lorsqu'il se trouve sur ce tronçon (21), identique ou approximativement identique à un deuxième tronçon (22) qui part de la ligne d'action (14) du premier organe de tirage de film (12) et s'étend, en passant par la surface extérieure (19) et par au moins un élément de formage (15), jusqu'à la ligne d'action (14) sur le deuxième organe de tirage de film (20), et le nombre des éléments de formage (15) des deux tronçons (21, 22) est différent, **caractérisée en ce qu'**une parallèle (23) est prévue à une distance (34) de la ligne d'action (14), qui se situe comme la ligne d'action (14) dans le plan de la section, **en ce qu'**un rayon de courbure (R1) de la surface intérieure (24) d'une zone (27) de la conduite de remplissage (11) débute au point de jonction (25) de la ligne d'action (14) avec une ligne centrale (26) s'étendant perpendiculairement à celle-ci, traversant le plan de la section, **en ce qu'**un rayon de courbure (R2) de la surface extérieure (28) de cette zone (27) débute au point d'intersection (29) de la parallèle (23) avec la ligne centrale (26), et **en ce que** le rayon de courbure (R1) de la surface intérieure (24) de la zone (27) est plus petit que le rayon de courbure (R2) de la surface extérieure (28) de cette zone (27).

2. Machine verticale de formage, remplissage et scellage de sacs selon la revendication 1, **caractérisée en ce qu'**aucun élément de formage ne se trouve le long du premier tronçon (21) et deux éléments de formage (15) sont prévus le long du deuxième tronçon (22).

3. Machine verticale de formage, remplissage et scellage de sacs selon la revendication 1, **caractérisée en ce que** la zone (27) est prévue le long du premier tronçon (21).

4. Machine verticale de formage, remplissage et scellage de sacs selon la revendication 3, **caractérisée en ce que** la zone (27) est prévue le long du premier tronçon (21) et du deuxième tronçon (22).

5. Machine verticale de formage, remplissage et scellage de sacs selon l'une quelconque des revendications 1 à 4, **caractérisée en ce qu'**un élément de guidage (30) saisissant au moyen des éléments de formage (15), les arêtes (16) s'étendant entre les éléments de formage (15) et l'élément de guidage (30).

6. Machine verticale de formage, remplissage et scellage de sacs selon la revendication 1, **caractérisée en ce qu'**une pièce (32) de la conduite de remplissage (11) s'étendant dans une partie de conduite de remplissage (31) de l'épaulement de forme (2) présente une surface intérieure (24) concentrique par rapport à la surface extérieure (28).

7. Machine verticale de formage, remplissage et scellage de sacs selon au moins l'une quelconque des revendications 1 à 6, **caractérisée en ce que** des aplatissements (33) sont prévus sur la conduite de remplissage (11) pour installer les organes de tirage de film (12, 20).
